(19) Europäisches Patentamt
European Patent Office
Office européen des brevets

(11) Veröffentlichungsnummer: **0 309 843 B1**

(12) **EUROPÄISCHE PATENTSCHRIFT**

(45) Veröffentlichungstag der Patentschrift: **29.01.92**

(51) Int. Cl.$^5$: **C07F 9/18**, A01N 57/14

(21) Anmeldenummer: **88115297.9**

(22) Anmeldetag: **17.09.88**

# (54) O-(O-Ethyl-S-alkylphosphoryl)-O-(carbamoyl)-brenzkatechinderivate.

(30) Priorität: **26.09.87 DE 3732527**

(43) Veröffentlichungstag der Anmeldung:
**05.04.89 Patentblatt 89/14**

(45) Bekanntmachung des Hinweises auf die Patenterteilung:
**29.01.92 Patentblatt 92/05**

(84) Benannte Vertragsstaaten:
**AT BE CH DE ES FR GB GR IT LI NL**

(56) Entgegenhaltungen:
**FR-A- 2 154 745**

**JOURNAL OF AGRICULTURAL AND FOOD CHEMISTRY, Band 20, Nr. 3, 1972, Seiten 543-546; B. HETNARSKI et al.: "Preparation and properties of phenyl carbamates with phosphoryl and carbamyl substituents"**

(73) Patentinhaber: **BASF Aktiengesellschaft**
**Carl-Bosch-Strasse 38**
**W-6700 Ludwigshafen(DE)**

(72) Erfinder: **Seppelt, Wolfgang, Dr.**
**Stettiner Strasse 1a**
**W-6712 Bobenheim-Roxheim(DE)**
Erfinder: **Sproesser, Linhard, Dr.**
**Goethestrasse 4**
**W-6702 Bad Duerkheim(DE)**
Erfinder: **Kersten, Siegfried, Dr.**
**Max-Slevogt-Strasse 21**
**W-6710 Frankenthal(DE)**
Erfinder: **Hofmeister, Peter, Dr.**
**Bernhard-Humblot-Strasse 12**
**W-6730 Neustadt(DE)**
Erfinder: **Kuenast, Christoph Dr.**
**Salierstrasse 2**
**W-6701 Otterstadt(DE)**

EP 0 309 843 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue O-(O-Ethyl-S-alkylphosphoryl)-O-(carbamoyl)-brenzkatechinderivate der allgemeinen Formel I

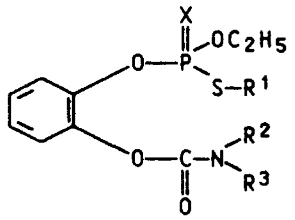

(I)

in der die Substituenten folgende Bedeutung haben:

- $R^1$ $C_1$-$C_4$-Alkyl,
- $R^2$ Wasserstoff, $C_1$-$C_4$-Alkyl oder $C_1$-$C_4$-Alkoxy,
- $R^3$ Wasserstoff oder $C_1$-$C_4$-Alkyl, und
- X Sauerstoff oder Schwefel.

Außerdem betrifft die Erfindung die Herstellung der Verbindungen I, Schädlingsbekämpfungsmittel, die die Verbindungen I als Wirkstoffe enthalten, sowie ein Verfahren zur Bekämpfung von Schädlingen.

Aus J. Agr. Food Chem. 20 (3), 543-546 (1972) sind Verbindungen des Typs I, die im Phosphatteil des Moleküls keinen Thioester ($R^1$-S-) tragen, als Insektizide insbesondere gegen Fliegen bekannt. Die Wirkung dieser Verbindungen läßt jedoch zu wünschen übrig.

Der Erfindung lag daher die Aufgabe zugrunde, neue O-(O-Ethyl-S-alkylphosphoryl)-O-(carbamoyl)-brenzkatechinderivate mit verbesserter Wirkung bereitzustellen.

Demgemäß wurden die eingangs definierten neuen O-(O-Ethyl-S-alkylphosphoryl)-O-(carbamoyl)-brenzkatechinderivate I, Verfahren zu deren Herstellung, Schädlingsbekämpfungsmittel, die die Verbindungen I als Wirkstoffe enthalten, sowie ein Verfahren zur Bekämpfung von Schädlingen mit O-(O-Ethyl-S-alkylphosphoryl)-O-(carbamoyl)-brenzkatechinderivaten I gefunden.

Im einzelnen haben die Substituenten in Formel I folgende Bedeutungen:

- $R^1$ - $C_1$-$C_4$-Alkyl, bevorzugt $C_3$-$C_4$-Alkyl, wie n-Propyl, iso-Propyl, n-Butyl, iso-Butyl, sec.-Butyl oder tert.-Butyl, besonders bevorzugt n-Propyl und sec.-Butyl,
- $R^2$ - Wasserstoff,
  - $C_1$-$C_4$-Alkyl, bevorzugt $C_1$-$C_2$-Alkyl, besonders bevorzugt Methyl,
  - $C_1$-$C_4$-Alkoxy, bevorzugt $C_1$-$C_2$-Alkoxy, wie Methoxy und Ethoxy,
- $R^3$ - Wasserstoff,
  - $C_1$-$C_4$-Alkyl, bevorzugt $C_1$-$C_2$-Alkyl, besonders bevorzugt Methyl,
- X - Sauerstoff und
  - Schwefel.

Die Verbindungen I sind nach folgender Methode erhältlich:

Die Umsetzung erfolgt zwischen einem O-Carbamoyl-brenzkatechin II und einem O-Ethyl-S-alkylphosphorylhalogenid III in Gegenwart einer Base im Temperaturbereich von (-20) bis 250° C, vorzugsweise von 20 bis 120° C nach folgender Reaktionsgleichung:

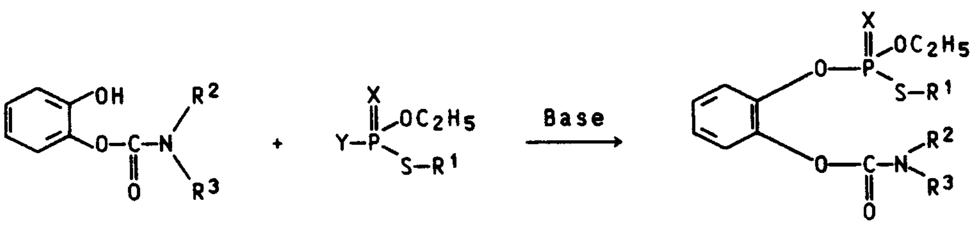


(II) (III) (I)

Y = Fluor, Chlor, Brom, Iod.

Die O-Carbamoyl-brenzkatechinderivate II sind aus aus J. prakt. Chem. 313, 626ff (1971) bekannt oder

können nach den dort beschriebenen Methoden erhalten werden.

Die O-Ethyl-S-alkylphosphorhalogenide III sind zum Teil aus Houben-Weyl, Methoden der organischen Chemie, Bd. 12/2 (1964), 621f und Bd. E/2 (1982), 676, Thieme-Verlag bekannt oder können nach den dort üblichen Methoden erhalten werden.

Zur Herstellung der erfindungsgemäßen Verbindungen I nach der vorstehend beschriebenen Methode setzt man die Ausgangsstoffe üblicherweise in stöchiometrischem Verhältnis ein. Ein Überschuß des einen oder anderen kann in Einzelfällen aber durchaus vorteilhaft sein.

Man setzt normalerweise mindestens equivalente Mengen einer Base zu II und/oder III zu, kann aber diese auch im Überschuß oder gegebenenfalls auch als Lösungsmittel verwenden. Als Basen eignen sich beispielsweise Hydroxide von Alkali- und Erdalkalimetallen, wie Natriumhydroxid, Kaliumhydroxid und Calciumhydroxid. Alkoholate von Alkali- und Erdalkalimetallen, wie Natriummethylat, Natriumethylat, Calciummethanolat oder Kalium-tert.-butylat; Alkali- oder Erdalkalimetallhydride, wie Natriumhydrid, Kaliumhydrid oder Calciumhydrid; Alkali- oder Erdalkalicarbonate, wie Natriumcarbonat, Kaliumcarbonat oder Calciumcarbonat; aliphatische Amine, wie Dimethylamin, Triethylamin oder Diisopropylamin; heterocyclische Amine, wie Piperidin, Piperazin oder Pyrrolidin; aromatische Amine, wie Pyridin oder Pyrrol und gegebenenfalls auch Alkyllithium-Verbindungen, wie n-Butyllithium.

Die Umsetzung wird zweckmäßigerweise in einem Lösungsmittel oder Verdünnungsmittel durchgeführt. Hierzu eignen sich beispielsweise aliphatische Kohlenwasserstoffe, wie n-Pentan, n-Hexan, das Hexan-Isomerengemisch und Petrolether; aromatische Kohlenwasserstoffe, wie Benzol, Toluol, die Xylole und deren Isomerengemische, Benzin; chlorierte Kohlenwasserstoffe wie Methylenchlorid, Chloroform und Tetrachlorkohlenstoff; aromatische Chlorkohlenwasserstoffe wie Chlorbenzol; Alkohole, wie Methanol, Ethanol, n-Propanol und Isopropanol; Ether, wie Diethyl-, Di-n-Butylether, Methyl-tert.-butylether, Tetrahydrofuran und Dioxan; Ketone, wie Aceton, Methylethylketon, Methylisopropylketon und Methylisobutylketon; Nitrile, wie Acetonitril und Propionitril; aprotische dipolare Lösungsmittel wie Dimethylformamid,, Dimethylacetamid, Dimethylsulfoxid oder Pyridin. Auch Gemische dieser Stoffe können als Lösungs- und Verdünnungsmittel verwendet werden.

Die Umsetzungen verlaufen gewöhnlich oberhalb von -20 °C mit ausreichenden Geschwindigkeiten. 120 °C müssen im allgemeinen nicht überschritten werden. Da sie in einigen Fällen unter Wärmeentwicklung verlaufen, kann es von Vorteil sein, Kühlmöglichkeiten vorzusehen.

Die Reaktionsgemische werden in üblicher Weise aufgearbeitet, z.B. durch Versetzen mit Wasser, Trennen der Phasen und Säulenchromatographie. Die neuen Verbindungen der Formel I fallen teilweise in Form farbloser oder schwach bräunlich gefärbter, zäher Öle an, die sich durch längeres Erwärmen unter vermindertem Druck auf mäßig erhöhte Temperatur ("Andestillieren") von den letzten flüchtigen Anteilen befreien und auf diese Weise reinigen lassen. Erhält man die Verbindungen der Formel I in kristalliner Form, so kann ihre Reinigung durch Umkristallisation erfolgen.

Die O-(O-Ethyl-S-alkylphosphoryl)-O-(carbamoyl)-brenzkatechinderivate der allgemeinen Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea ptiyocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer),

Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestis (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagai (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-puncta (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Ortiorrhynchus sulcatus (Gefurchter Lappenrüßler), Otiorrhynchus ovatus (Erdbeerwurzelrüßler), Hylobius abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Lycoria pectoralis, Mayetiola destructor (Hessenfliege), Basineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hysocyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ovis, Chrysomya macellaria, Chrysomya hominivorax, Lucilia cuprina, Lucilia sericata, Hypoderma lineata;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise);

aus der Ordnung der Wanzen (Heteroptera) beispielsweise Nezara viridula (Grüne Reiswanze), Eurygaster integriceps (Asiatische Getreidewande), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nasturtii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfaltenlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkrischenlaus), Dysaulacorthum pseudosolani (Gefleckte Kartoffellaus), Acyrthosiphon onobrychis (Grüne Erbsenalaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus, Calotermes flavicollis, Leucotermes flavipes, Termes natalensis;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantes (Riesenschabe).

Zur Klasse der Arachnoidea gehören Spinntentiere (Acarina) beispielsweise Ixodes ricinus (Holzbock), Ornithodorus moubata, Amblyomma americanum, Dermacentor silvarum, Boophilus microplus, Tetranychus telarius, Tetranychus pacificus, Paratetranychus pilosus, Bryobia praetiosa.

Zur Klasse der Nematoden zählen beispielsweise Wurzelgallennematoden, z.B. Meloidogyne incognita,

Meloidogyne hapla, Meloidogyne javanica, Zysten bildende Nematoden, z.B. Globodera rostochiensis, Heterodera schachtii, Heterodera avenae, Heterodera glycinae, Heterodera trifolii, Stock- und Blattälchen, z.B. Ditylenchus dipsaci, Ditylenchus destructor, Pratylenchus neglectus, Pratylenchus penetrans, Pratylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können als Emulsionskonzentrate, Pasten oder netzbare Pulver (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkali, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Aklylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolylglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 5 Gew.-Teile der Verbindung Nr. 4 werden mit 95 Gew.-Teilen feinteiligem Kaolin innig vermischt. Man erhält auf diese Weise ein Stäubemittel, das 3 Gew.-% des Wirkstoffs enthält.

II. 30 Gew.-Teile der Verbindung Nr. 3 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gew.-Teile der Verbindung Nr. 10 werden in einer Mischung gelöst, die aus 90 Gew.-Teilen Xylol, 6 Gew.-Teilen des Anlagerungsproduktes von 8 bis 10 Mol Ethylenoxid an 1 Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht.

IV. 20 Gew.-Teile der Verbindung Nr. 7 werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5 Gew.-Teilen des Anlagerungsproduktes von 40 Mol Ethylenoxid an 1 Mol Ricinusöl besteht.

V. 80 Gew.-Teile der Verbindung Nr. 8 werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel,

Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in größeren Bereichen variiert werden.

Im allgemeinen liegen sie zwischen 0,0001 und 10 %, vorzugsweise zwischen 0,01 und 1 %. Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Die Aufwandmenge an Wirkstoff beträgt unter Freilandbedingungen 0,001 bis 10, vorzugsweise 0,01 bis 1 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibromethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N[(methylcarbamoyl)-oxyl]-thio-acetimidat, Methyl-N′,N′-dimethyl-N-[-(methylcarbamoyl)oxy]-1-thiooxamidat, N-(2-Methylchlorphenyl)-N′,N′-dimethylformamidin, Tetrachlorthiophen, 1-(2,6-Difluor-benzoyl)-3-(4-chlorphenyl)-harnstoff, O,O-Dimethyl-O-(p-nitrophenyl)-phosphorthioat, O,O-Diethyl-O-(p-nitrophenyl)-phosphorthioat, O-Ethyl-O(p-nitrophenyl)-phenyl-phosphonothioat, O,O-Dimethyl-O-(3-methyl-4-nitrophenyl)-phosphorthioat, 0,0-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphorthioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropyl-phosphoramidat, O,O-Diethyl-O-(p-methylsulfinyl-phenyl)-phosphorthioat, O-Ethyl-S-phenyl-ethyl-phosphonodithioat, O,O-Diethyl-[2-chlor-1-(2,4-dichlorphenyl)-vinyl]-phosphat, O,O-Dimethyl-[2-chlor-1-(2,4,5-trichlorphenyl)]-vinylphosphat, O,O-Dimethyl-S-(1′-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxy-ethylphosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methylcarbamoyl-methyl)-phosphorthioat, O,O-Dimethyl-S-(N-methoxyethyl-carbamoylmethyl)-phosphordithioat, O,O-Dimethyl-S-(N-formyl-N-methyl-carbamoyl-methyl)-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthiomethyl)-phosphordithioat, O,O-Diethyl-S[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthio-ethyl)-phosphordithioat, O,O-Diethyl-S-(2-ethylsulfinyl-ethyl)-phosphorthioat, O,O-Diethyl-thiophosphoryliminophenyl)-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O-[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amidothioat, O,S-Dimethyl-N-acetyl-phosphoramidothioat, alpha-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,-trans-chrysanthemat, 5-Benzyl-furyl-(3)-methyl-DL-cis,-trans-chrysanthemat, 3-Phenoxybenzyl(+)-cis,-trans-2,2-dimethyl-3-(2,2-dichlorvinyl)-cyclopropancarboxylat, alpha-Cyano-3-phenoxybenzyl(+)-cis,-trans-2,2-dimethyl-3-(2,2-dichlorvinyl)-cyclopropancarboxylat, (s)-alpha-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis,-trans-chrysanthemat, 2-Methyl-5-(2-propinyl)-3-furylmethyl-chrysanthemat, (alpha-Cyano-3-phenoxybenzyl)-alpha-isopropyl-4-chlorphenylacetat.

Herstellungsbeispiel

O-(O-Ethyl-S-n-propylphosphoryl)-O-(N-methylcarbamoyl)-brenzkatechin (Verbindung Nr. 4)

Zu 167 g (1 Mol) N-Methylcarbamoylbrenzkatechin in 1000 ml Acetonitril werden unter Rühren 203 g (1 Mol) O-Ethyl-S-n-propyl-phosphorylchlorid gegeben, 101 g (1 Mol) Triethylamin bei Raumtemperatur zugetropft und 2 Stunden auf 50 °C erwärmt. Nach dem Abkühlen wird abgesaugt, das Filtrat i. Vak. eingeengt, der Rückstand in 600 ml Methylenchlorid aufgenommen, die Lösung mit Wasser dreimal mit 10 %iger $Na_2CO_3$-Lösung und noch dreimal mit Wasser gewaschen. Nach Trocknung über Natriumsulfat wird das Lösungsmittel i.Vak. entfernt. Man erhält 163 g (49 %) O-(O-Ethyl-S-n-propylphosphoryl)-O-(N-methylcarbamoyl)-brenzkatechin (Verbindung Nr. 4) als Öl.

Die in der nachstehenden Tabelle aufgeführten Verbindungen I wurden entsprechend dem voranstehenden Herstellungsbeispiel erhalten, soweit sie durch ihre NMR-Spektren identifiziert sind; andere Verbindungen, die der Formel I entsprechen, können auf die gleiche Weise erhalten werden.

Zur Charakterisierung der erfindungsgemäßen Verbindungen I wurden $^1H$-NMR-Spektren in $CDCl_3$ aufgenommen.

Tabelle

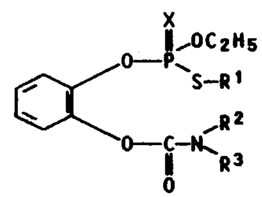

(I)

| Verbindung Nr. | $R^1$ | $R^2$ | $R^3$ | X | $^1$H-NMR-Daten Feldstärke [MHz] | Signale δ [ppm] |
|---|---|---|---|---|---|---|
| 1 | sec.-$C_4H_9$ | $CH_3$ | H | S | | 0,98 (m,3H); 1,38 (m,6H); 1,68 (m,2H); 2,82 (d,3H); 3,40 (m,1H); 4,24 (m,2H); 5,37 (bd,1H); 7,13-7,55 (m, 4H); |
| 2 | iso-$C_4H_9$ | $CH_3$ | H | S | | 1,0 (d,6H); 1,36 (t,3H); 1,90 (m,1H); 2,82 (d,3H); 2,90 (m, 2H); 4,25 (m,2H); 5,44 (bd,1H) 7,13-7,55 (m,4H); |
| 3 | n-$C_3H_7$ | $CH_3$ | H | S | | 1,0 (t,3H); 1,40 (t,3H); 1,70 (m,2H); 2,90 (d,3H); 2,96 (m,2H); 4,27 (m,2H); 5,20 (bd,1H); 7,15-7,50 (m,4H); |
| 4 | n-$C_3H_7$ | $CH_3$ | H | O | | 0,95 (t,3H); 1,37 (t,3H); 1,70 (m,2H); 2,75 (m,5H); 4,25 (m,2H); 5,55 (bs,1H); 7,10-7,50 (m,4H); |
| 5 | sec.-$C_4H_9$ | $CH_3$ | H | O | | |
| 6 | iso-$C_4H_9$ | $CH_3$ | H | O | | |

Tabelle (Fortsetzung)

| Verbindung Nr. | $R^1$ | $R^2$ | $R^3$ | X | $^1$H-NMR-Daten in $CDCl_3$ Feldstärke [MHz] | Signale δ [ppm] |
|---|---|---|---|---|---|---|
| 7 | iso-$C_4H_9$ | $CH_3$ | $CH_3$ | S | | 1,0 (m,6H); 1,38 (t,3H); 1,92 (m,1H); 2,87 (m,2H); 3,0 (s,3H); 3,16 (s,3H); 4,25 (m,2H); 7,15-7,50 (m, 4H); |
| 8 | sec.-$C_4H_9$ | $CH_3$ | $CH_3$ | S | | 1,0 (m,3H); 1,38 (m,6H); 1,72 (m,2H); 3,02 (s,3H); 3,17 (s,3H); 3,44 (m,1H); 4,26 (m,2H); 7,15-7,50 (m,4H); |
| 9 | n-$C_3H_7$ | $CH_3$ | $CH_3$ | S | | 1,0 (t,3H); 1,38 (t,3H); 1,72 (m,2H); 2,90 (m,2H); 3,00 (s,3H); 3,15 (s,3H); 4,23 (m,2H); 7,15-7,50 (m,4H); |
| 10 | n-$C_3H_7$ | $CH_3$ | $CH_3$ | O | | 0,96 (t,3H); 1,40 (t,3H); 1,68 (m,2H); 2,88 (m,2H); 3,00 (s,3H); 3,16 (s,3H); 4,25 (m,2H); 7,15-7,50 (m,4H); |
| 11 | sec.-$C_4H_9$ | $CH_3$ | $CH_3$ | O | | |
| 12 | iso-$C_4H_9$ | $CH_3$ | $CH_3$ | O | | 0,96 (d,6H); 1,38 (t,3H); 1,85 (m,1H); 2,78 (m,2H); 3,00 (s,3H); 3,14 (s,3H); 4,25 (m,2H); 7,10-7,50 (m,4H); |
| 13 | iso-$C_4H_9$ | $OC_2H_5$ | H | O | | 0,95 (d,6H); 1,30 (t,3H); 1,37 (t,3H); 1,85 (m,1H); 2,80 (m,2H); 4,03 (q,2H); 4,27 (m,2H); 7,20-7,50 (m, 4H); 8,35 (bs,1H); |

Tabelle (Fortsetzung)

| Verbindung Nr. | $R^1$ | $R^2$ | $R^3$ | X | $^1H$-NMR-Daten in $CDCl_3$ Feldstärke [MHz] | Signale δ [ppm] | Brechungs-index |
|---|---|---|---|---|---|---|---|
| 14 | n-$C_3H_7$ | $OC_2H_5$ | H | O | | 0,97 (m,3H); 1,27 (t,3H); 1,37 (t,3H); 1,68 (m,2H); 2,90 (m,2H); 4,00 (q,2H); 4,27 (m,2H); 7,15-7,50 (m,4H); 8,87 (bs,1H); | |
| 15 | sec.-$C_4H_9$ | $OC_2H_5$ | H | O | | | |
| 16 | iso-$C_4H_9$ | $OC_2H_5$ | H | S | | | |
| 17 | n-$C_3H_7$ | $OC_2H_5$ | H | S | | 0,98 (t,3H); 1,30 (t,3H); 1,40 (t,3H); 1,88 (m,2H); 2,96 (m,2H); 4,07 (q,2H); 4,25 (m,2H); 7,15-7,50 (m, 4H); 8,04 (bs,1H); | |
| 18 | n-$C_3H_7$ | H | H | O | | 0,95 (m,3H); 1,25 (m,3H); 1,63 (m,2H); 2,75 (m,2H); 4,10 (m,2H); 6,65-6,90 (m,4H); 7,50 (b,2H) | $n_D^{21}$ 1,5255 |
| 19 | sec.-$C_4H_7$ | H | H | O | | | |
| 20 | iso-$C_4H_9$ | H | H | O | | | |

Anwendungsbeispiele

In den folgenden Beispielen wurden die erfindungsgemäßen Verbindungen bzw. sie enthaltende Mittel hinsichtlich ihrer Wirkung auf Schädlinge mit den nachstehenden Verbindungen des Standes der Technik

verglichen.

A: 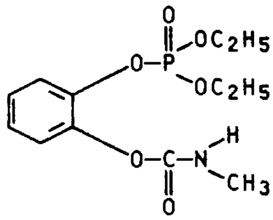

bekannt aus J. Agr. Food Chem. 20, 544 (1972) als Verbindung Nr. I

B: 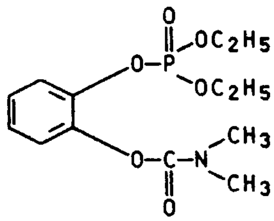

bekannt aus J. Agr. Food Chem. 20, 544 (1972) als Verbindung Nr. II

C: 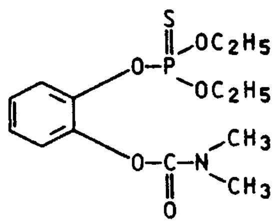

bekannt aus J. Agr. Food Chem. 20, 544 (1972) als Verbindung Nr. IV

Die Konzentrationen, bei denen die untersuchten Verbindungen eine 100 %ige Mortalität bzw. Hemmung bewirken, sind die jeweiligen Minimalkonzentrationen. Für jede Konzentration wurden mindestens 2 Versuche angesetzt.

Beispiel A:
Tetranychus telarius (Spinnmilbe), Kontaktwirkung, Spritzversuch

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden. Nach 8 Tagen werden die Pflanzen auf lebende Spinnmilben untersucht.

Bei diesem Versuch lag die mortale Dosis der Verbindungen Nr. 1, 2, 3, 4, 9, 10, 12 und 14 bei nicht mehr als 0,04 Gew.%. Bei den Vergleichsverbindungen A, B und C zeigte eine Dosis von 0,1 Gew.% keine Wirkung.

Beispiel B
Tetranychus telarius (Spinnmilbe), Kontaktwirkung, Residualwirkung

Getopfte Buschbohnen, die das zweite Folgeblattpaar zeigen, werden in der Spritzkabine mit der wäßrigen Wirkstoffaufbereitung tropfnaß gespritzt. Die Pflanzen kommen dazu auf den Drehteller und werden von allen Seiten mit insgesamt 50 ml Spritzbrühe besprüht. Der Spritzvorgang dauert ca. 22 Sekunden. Nach 24 Stunden infiziert man die Pflanzen mit Blattstücken, die stark mit Spinnmilben besetzt sind. Nach 12 Tagen beurteilt man den Befall der Pflanzen.

Bei diesem Versuch lag die mortale Dosis der Verbindungen Nr. 2, 3, 4, 7, 10 und 12 bei einer Dosis von höchstens 0,1 Gew.%, bei der die Vergleichsverbindungen A, B und C keine Wirkung zeigten.

Beispiel C
Plutella maculipennis (Kohlschaben-Raupen), Fraßwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Mortalität.

Bei diesem Versuch lag die mortale Dosis von Verbindung 9 bei 0,004 Gew.%. Die Verbindungen Nr. 1, 3, 4 und 10 zeigten bei einer Dosis von nicht mehr als 0,002 Gew.% eine 80 %ige Mortalität. Die Vergleichsverbindungen A, B und C zeigten bei einer Dosis von 0,1 Gew.% keine Wirkung.

Beispiel D
Aphis fabae (Blattläuse) Kontaktwirkung, Spritzversuch

Getopfte Bohnenpflanzen (Vicia faba) mit starken Blattlauskolonien werden in der Spritzkammer mit den wäßrigen Wirkstoffaufbereitungen tropfnaß gespritzt. Die Auswertung erfolgt nach 24 Stunden.

Bei diesem Versuch lag die mortale Dosis der Verbindungen Nr. 1, 3, 7 und 8 bei nicht mehr als 0,01 Gew.%, die der Vergleichsverbindung A bei 0,1 Gew.%. Die Vergleichsverbindungen B und C zeigten bei einer Dosis von 0,1 Gew.% keine Wirkung.

**Patentansprüche**

**1.** O-(O-Ethyl-S-alkylphosphoryl)-O-(carbamoyl)-brenzkatechinderivate der allgemeinen Formel I

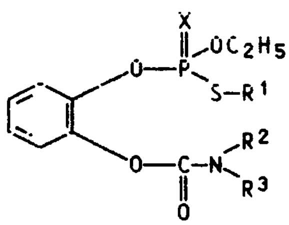

(I)

in der die Substituenten folgende Bedeutung haben:

| | |
|---|---|
| $R^1$ | $C_1$-$C_4$-Alkyl, |
| $R^2$ | Wasserstoff, $C_1$-$C_4$-Alkyl oder $C_1$-$C_4$-Alkoxy, |
| $R^3$ | Wasserstoff oder $C_1$-$C_4$-Alkyl, und |
| X | Sauerstoff oder Schwefel. |

**2.** Verfahren zur Herstellung von O-(O-Ethyl-S-alkylphosphoryl)-O-(carbamoyl)-brenzkatechinderivaten der allgemeinen Formel I gemäß Anspruch 1, dadurch gekennzeichnet, daß man ein O-Carbamoyl-brenzkatechin der allgemeinen Formel II

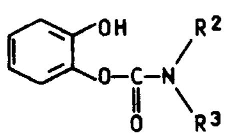

(II)

mit einem O-Ethyl-S-alkylphosphorylhalogenid der allgemeinen Formel III

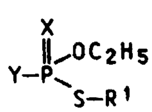

(III),

in der Y für Halogen steht, in Gegenwart einer basischen Verbindung in an sich bekannter Weise umsetzt.

3. Schädlingsbekämpfungsmittel, enthaltend ein O-(O-Ethyl-S-alkylphosphoryl)-O-(carbamoyl)-brenzkatechinderivat der Formel I gemäß Anspruch 1 neben üblichen Trägerstoffen.

4. Schädlingsbekämpfungsmittel gemäß Anspruch 3, dadurch gekennzeichnet, daß es 0,1 bis 95 Gew.% eines O-(O-Ethyl-S-alkylphosphryl)-O-(carbamoyl)-brenzkatechinderivates I enthält.

5. Verfahren zur Bekämpfung von Schädlingen, dadurch gekennzeichnet, daß man die Schädlinge und/oder die von Schädlingen freizuhaltenden Flächen und/oder Räume mit einer für Schädlinge wirksamen Menge eines O-(O-Ethyl-S-alkylphosphoryl)-O-(carbamoyl)-brenzkatechinderivates der Formel I gemäß Anspruch 1 behandelt.

6. O-(O-Ethyl-S-n-propylphosphoryl)-O-N-methylcarbamoyl)-brenzkatechin.

**Claims**

1. An O-(O-ethyl-S-alkylphosphoryl)-O-(carbamoyl)-pyrocatechol derivative of the general formula I

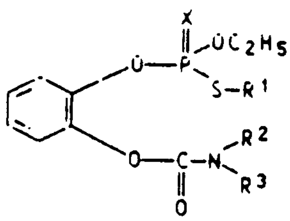

(I)

where $R^1$ is $C_1$-$C_4$-alkyl, $R^2$ is hydrogen, $C_1$-$C_4$-alkyl or $C_1$-$C_4$-alkoxy, $R^3$ is hydrogen or $C_1$-$C_4$-alkyl, and X is oxygen or sulfur.

2. A process for preparing an O-(O-ethyl-S-alkylphosphoryl)-O-(carbamoyl)-pyrocatechol derivative of the general formula I as claimed in claim 1, wherein an O-carbamoyl-pyrocatechol of the general formula II

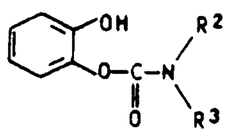

(II)

is reacted in a known manner with an O-ethyl-S-alkylphosphoryl halide of the general formula III

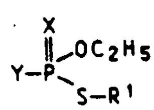

(III)

where Y is halogen, in the presence of a basic compound.

3. A pesticide containing an O-(O-ethyl-S-alkylphosphoryl)-O-(carbamoyl)-pyrocatechol derivative of the formula I as claimed in claim 1 and conventional carriers.

4. A pesticide as claimed in claim 3, containing from 0.1 to 95% by weight of an O-(O-ethyl-S-alkylphosphoryl)-O-(carbamoyl)-pyrocatechol derivative I.

5. A method for controlling pests, wherein the pests, or the areas or spaces to be kept free from pests are treated with a pesticidally effective amount of an O-(O-ethyl-S-alkylphosphoryl)-O-(carbamoyl)-pyrocatechol derivative of the formula I as claimed in claim 1.

6. O-(O-ethyl-S-n-propylphosphoryl)-O-(N-methyl-carbamoyl)-pyrocatechol.

**Revendications**

1. Dérivés d'O-(O-éthyl-S-alkylphosphoryl)-O-(carbamoyl)-pyrocatéchols de formule générale I

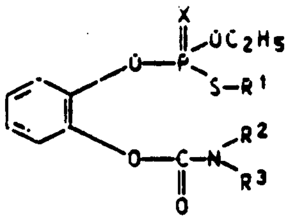

(I)

dans laquelle les symboles ont les significations suivantes :

$R^1$ représente un groupe alkyle en C 1-C 4,

$R^2$ représente l'hydrogène, un groupe alkyle en C 1- C 4 ou alcoxy en C 1-C 4,

$R^3$ représente l'hydrogène ou un groupe alkyle en C 1-C 4, et

X représente l'oxygène ou le soufre.

2. Procédé de préparation des dérivés d'O-(O-éthyl-S-alkylphophoryl)-O-(carbamoyl)-pyrocatéchols de formule générale I de la revendication 1, caractérisé en ce que l'on fait réagir de manière connue en soi, en présence d'un composé basique, un O-carbamoyl-pyrocatéchol de formule générale II

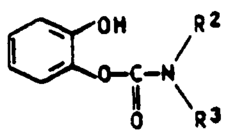

(II)

avec un halogénure d'O-éthyl-S-alkylphosphoryle de formule générale III

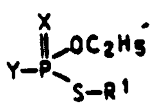

(III),

dans laquelle Y représente un halogène.

3. Produit pesticide contenant un dérivé d'O-(O-éthyl-S-alkylphophoryl)-O-(carbamoyl)-pyrocatéchol de formule I de la revendication 1 avec des véhicules usuels.

4. Produit pesticide selon la revendication 3, caractérisé en ce qu'il contient de 0,1 à 95 % d'un dérivé d'O-(O-éthyl-S-alkylphosphoryl)-O-(carbamoyl)-pyrocatéchol I.

5. Procédé pour combattre les parasites, caractérisé en ce que l'on traite les parasites et/ou les surfaces et/ou lieux à débarrasser des parasites par une quantité pesticide efficace d'un dérivé d'O-(O-éthyl-S-alkylphosphoryl)-O-(carbamoyl)-pyrocatéchol de formule I de la revendication 1.

6. L'O-(O-éthyl-S-n-propylphosphoryl)-O-(N-méthyl-carbamoyl)-pyrocatéchol.